## Europäisches Patentamt

(19) **European Patent Office**

**Office européen des brevets**

(11) Veröffentlichungsnummer: **0 054 651**
**B1**

(12) **EUROPÄISCHE PATENTSCHRIFT**

(45) Veröffentlichungstag der Patentschrift:
**14.08.85**

(21) Anmeldenummer: **81108391.4**

(22) Anmeldetag: **16.10.81**

(51) Int. Cl.⁴: **C 08 F 14/06**, C 08 F 2/24

(54) **Verfahren zur Herstellung von verpastbaren Polymeren des Vinylchlorids.**

(30) Priorität: **24.12.80 DE 3049008**

(43) Veröffentlichungstag der Anmeldung:
**30.06.82 Patentblatt 82/26**

(45) Bekanntmachung des Hinweises auf die Patenterteilung:
**14.08.85 Patentblatt 85/33**

(84) Benannte Vertragsstaaten:
**BE CH FR GB IT LI**

(56) Entgegenhaltungen:
**DE - A - 1 964 029**
**FR - A - 2 311 040**

(73) Patentinhaber: **CHEMISCHE WERKE HÜLS AG,
Postfach 1320, D-4370 Marl 1 (DE)**

(72) Erfinder: **Boeke, Burkhard, Dr., Im Hundel 34,
D-4358 Haltern 6 (DE)**
Erfinder: **Kalka, Josef, Dr., Rohrkamp 6, D-4352 Herten
(DE)**

## Beschreibung

Gegenstand der Erfindung ist ein Verfahren zur Herstellung von verpastbaren Polymeren des Vinylchlorids durch diskontinuierliche Polymerisation in Gegenwart von wasserlöslichen Katalysatoren und von Emulgatoren.

Es ist bereits bekannt, Polyvinylchlorid, welches für die Pastenherstellung geeignet ist, nach dem kontinuierlichen oder diskontinuierlichen Verfahren herzustellen.

Das kontinuierliche Verfahren führt zu einem Pasten-Polyvinylchlorid mit niedriger Viskosität, jedoch mit einem relativ hohen Emulgatorgehalt.

Eine hohe Emulgatorkonzentration wirkt sich in den Endprodukten und bei der Verarbeitung nachteilig aus. Sie verschlechtert die Transparenz und die Thermostabilität und erhöht die Wasserempfindlichkeit der Polymerisate und der daraus hergestellten Artikel.

Niedrige Emulgatorgehalte erreicht man durch eine diskontinuierliche Ausführung der Polymerisation. Ein diskontinuierliches Polymerisationsverfahren wird in der deutschen Anmeldung P 6707 D, 39 c - 25 (bekanntgemacht am 07.09.50), beschrieben. Nach dieser Anmeldung ist bei der Polymerisation von Vinylchlorid in Emulsion der Emulgator kontinuierlich zugegeben.

Diese Arbeitsweise erlaubt es jedoch nicht, mit geringen Emulgatormengen und hohen Feststoffgehalten stabile Dispersionen und niedrige Pasten-Viskositäten zu erhalten.

Um bei der Polymerisation mit geringen Emulgatormengen stabile Latices und niedrige Pasten-Viskositäten zu erhalten, wurde die sogenannte Saatlatex-Methode angewendet. Die Methode besteht darin, dass man bei der Emulsionspolymerisation einen Saatlatex (Keim-Latex bzw. Primär-Dispersion) vorlegt, welcher den gesamten Emulgator bereits enthält. Die Verfahrensweise ist jedoch im grosstechnischen Verfahren sehr aufwendig, da die Primär-Dispersion extra hergestellt, gelagert und dosiert werden muss. Zudem ist die erreichbare Stabilität der so hergestellten Latices nicht optimal und die Viskositäten der nach diesem Verfahren gewonnenen PVC-Pasten liegen noch deutlich oberhalb der Pasten-Viskositäten, wie sie nach dem kontinuierlichen Verfahren gewonnen werden.

Nach einem neueren Verfahren (DE-PS 1 964 026) wurde vogeschlagen, die Emulgatorzugabe nach einem vorgegebenen Programm während des Polymerisationsvorgangs zu dosieren. Mit dieser Methode lassen sich stabile Dispersionen mit hohen Feststoffgehalten und extrem niedrigen Emulgatorgehalten herstellen.

Die nach diesem Verfahren erhaltenen Polyvinylchlorid-Pasten besitzen jedoch eine wesentlich höhere Viskosität als die, welche nach kontinuierlichen Verfahren erhalten werden.

Es wurde nun ein Verfahren zur Herstellung von verpastbaren Polymeren des Vinylchlorids durch diskontinuierliche Polymerisation in wässriger Emulsion in Gegenwart von wasserlöslichen Katalysatoren und von Emulgatoren gefunden, das dadurch gekennzeichnet ist, dass die Oberflächenspannung der Dispersion während des gesamten Polymerisationsvorgangs 15 bis 35% oberhalb des Wertes der Oberflächenspannung einer 2%igen wässrigen Lösung des verwendeten Emulgators eingestellt wird.

In bevorzugter Ausführungsform des Verfahrens wird die Oberflächenspannung der Dispersion während des gesamten Polymerisationsvorgangs 18 bis 20% oberhalb des Wertes der Oberflächenspannung einer 2%igen wässrigen Lösung des eingesetzten Emulgators eingestellt.

In einer sehr zweckmässigen Ausführungsform des Verfahrens wird die Oberflächenspannung zu Beginn der Polymerisation mittels eines durch Polymerisation von Vinylchlorid in wässriger Emulsion hergestellten Latex eingestellt, der den gleichen Emulgator enthält, wie er für die vorliegende Polymerisation verwendet wird, und der in einer Konzentration von 5 bis 20%, bezogen auf Polyvinylchlorid, eingesetzt wird.

Nach dem erfindungsgemässen Verfahren lassen sich niedrige Pasten-Viskositäten erhalten, wie sie sonst nur nach dem kontinuierlichen Verfahren erzielt werden können.

Die erfindungsgemässe Arbeitsweise ist unabhängig von der Art des einzusetzenden Emulgators; d.h. es können die üblichen Handelsprodukte angewendet werden.

Die Lenkung des Umsatzes erfolgt durch eine bei Polymerisationsreaktionen übliche Aktivierung.

Die Oberflächenspannung muss während des Polymerisationsvorgangs vom Start der Polymerisation an bis zum Endumsatz in den o.a. Grenzen gehalten werden. Die Oberflächenspannung ist während der Polymerisation durch laufende Probeentnahmen der Dispersion zu kontrollieren und mittels Emulgatorzufuhr auf Werte in der o.a. Höhe einzustellen. Ideal wäre die kontinuierliche Messung der Oberflächenspannung des Polymerisationsgemisches während der gesamten Polymerisation, da jedoch dazu noch keine Möglichkeiten vorhanden sind, genügen halbstündliche oder stündliche Messungen.

Der absolute Wert der Oberflächenspannung hängt von dem jeweiligen Emulgatortyp ab. Er ist auf 15 bis 35%, vorzugsweise 18 bis 20%, oberhalb des Wertes, den die Oberflächenspannung einer 2%igen wässrigen Lösung desselben Emulgators bei 20°C zeigt, einzustellen. Dabei ist es von besonderem Vorteil, wenn die Oberflächenspannung während der gesamten Polymerisation möglichst konstant gehalten wird und nicht mehr als höchstens 9% Schwankungsbreite aufweist.

Wird die Oberflächenspannung in den genannten Grenzen gehalten, stellt sich der gesamte Emulgatorgehalt erfahrungsgemäss zwischen 1 und 1,6 Gewichtsprozent, bezogen auf Monomeres, ein.

Um zu gewährleisten, dass die Oberflächenspannung vom Start der Polymerisation an auf der gewünschten Höhe liegt, ist es zweckmässig – aber nicht unbedingt erforderlich – einen Polyvinylchlorid-Latex vorzulegen. Die vorgelegte Latexmenge sollte 5 bis 20% der Gesamtmenge der Dispersion betragen. Der Feststoffgehalt der vorgelegten Dispersion ist nicht wesentlich. Er soll zweckmässigerweise zwischen 30 und 50% liegen. Die vorgelegte Dispersion enthält denselben Emulgator, wie er bei der in Rede stehenden Polymerisation verwendet wird. Die Oberflächenspannung des vorgelegten Latex liegt 15 bis 35% oberhalb des Wertes der Oberflächenspannung einer 2%igen wässrigen Lösung des eingesetzten Emulgators.

Das Monomer kann entweder insgesamt vorgelegt werden oder kontinuierlich bzw. absatzweise zugegeben werden. Es muss selbstverständlich immer so viel Vinylchlorid vorhanden sein, dass der notwendige Umsatz gewährleistet ist.

Das Wasser kann ebenfalls vorgelegt oder kontinuierlich zugegeben werden. Im allgemeinen ist es zweckmässig, wenigstens 25 Gewichtsprozent des Wassers vorzulegen, den anderen Teil mit dem Emulgator bzw. mit dem Aktivator zuzugeben.

Das Verhältnis Monomere zu Wasser kann bis zu sehr hohen Vinylchlorid-Konzentrationen beliebig sein (ca. 1:0,6 bis 1:1,6). Im allgemeinen wird man bestrebt sein, so zu polymerisieren, dass man Latices mit möglichst hohem Feststoffgehalt erhält.

Der Endumsatz soll natürlich möglichst hoch sein.

Als Katalysatoren lassen sich die üblichen wasserlöslichen Perverbindungen einsetzen, wie $H_2O_2$, Kaliumpersulfat sowie die Redoxsysteme, wie sie z.B. in Kainer, Polyvinylchlorid und Vinylchlorid-Mischpolymerisate, Springer-Verlag, 1965, Seite 47 ff., angegeben sind.

Als Emulgatoren lassen sich die bekannten Typen einsetzen. Es kommen insbesondere ionogene infrage, z.B. Salze von Carbonsäure, wie Natriumlaurat, Natriummyristat, Natriumpalmitat. Weiterhin eignen sich Salze primärer und sekundärer Alkylsulfate, z.B. Natriumcaprylsulfat, Natriumlaurylsulfat, Natriummyristylsulfat und Natriumoleylsulfat. Ebenso kommen infrage Sulfate veresterter Polyoxi-Verbindungen, wie monofettsaurer Glycerin-Schwefelsäureester, Salze primärer und sekundärer Alkylsulfonate, wie Natriumstearylsulfonat, Natriumoleylsulfonat, Mersolat® K30 (n-Alkansulfonat mit statistischer Verteilung der Sulfonsäuregruppe und Kettenlänge $C_{13}$-$C_{17}$) usw.

Es können auch Alkylarylsulfonate eingesetzt werden, z.B. das Na-Salz der p-n-Dodecylbenzolsulfonsäure.

Weiterhin kommen auch Gemische von Emulgatoren in Betracht. Zu den genannten Emulgatoren können auch zusätzlich Hilfsstoffe beigegeben werden, z.B. Alkohole, wie Laurylalkohol, Ester, wie Sorbitmonolaurat und Carbonsäureglykolester.

Die Polymerisationstemperatur beträgt – je nach gewünschtem Molekulargewicht – 40 bis 70°C.

Es wird mit üblichen Umfangsgeschwindigkeiten und mit den bei Emulsionspolymeristionsverfahren üblicherweise eingesetzten Blattrührern gerührt.

Das erfindungsgemässe Verfahren wird anhand der nachstehenden Beispiele erläutert.

Beispiel 1 (Vergleichsbeispiel)
In einem Rührautoklaven von 300 l Inhalt, der mit Heiz- und Kühleinrichtung versehen ist, werden unter Ausschluss von Luft-Sauerstoff 100 l entsalztes Wasser, 0,2 l einer 4,5%igen wässrigen Natriumalkylsulfonat-Lösung (MERSOLAT® K 30), 84 g Mononatrium- und 100 g Dinatriumphosphat und 45 kg Vinylchlorid vorgelegt. Die Reaktionsmischung wird auf 52°C aufgeheizt. Durch Zudosieren einer 0,5%igen wässrigen $H_2O_2$- und einer 0,2%igen wässrigen Ascorbinsäurelösung zu jeweils gleichen Teilen wird die Reaktion gestartet. Die Aktivatordosierung wird so eingestellt, dass bei nahezu voller Kühlkapazität die Polymerisationstemperatur konstant bleibt. Im weiteren Verlauf der Polymerisation wird entsprechend der DE-PS 1 964 026, Beispiel 8, nach folgendem Programm gearbeitet:

| Zeit in h | Vinylchlorid in kg | Emulgatorlösung in l |
|---|---|---|
| 1 | 45 | 0,2 |
| 2 | 45 | 1,7 |
| 3 |  | 9,4 |
| 4 |  | 10,6 |
| 5 |  | 5,4 |

Der Emulgatorgehalt im Polyvinylchlorid beträgt 0,9%, der Feststoffgehalt 48%, der K-Wert 70 (K-Wert-Methode von Fikentscher: Lunge-Berl 1934/5, Seite 945) und die Oberflächenspannung 51 mN/m.

Die Aufarbeitung der Dispersion erfolgt in einer Sprühtrocknungsanlage. Die Eingangstemperatur der Trocknungsluft beträgt dabei 160°C, die Ausgangstemperatur 60°C. Ansonsten erfolgt die Aufarbeitung wie in der DE-AS 2 146 753 beschrieben.

Aus 100 Gewichtsteilen des so erhaltenen PVC-Pulvers und 60 Gewichtsteilen Di-2-ethylhexylphthalat (DOP) wird eine Paste hergestellt und deren Viskosität nach 2 Stunden Lagerung bei verschiedenen Schergeschwindigkeiten in einem Rotations-Rheometer (Gerät: Rheomat 30 der Firma Contraves AG, Zürich) gemessen. Der Tabelle sind die Pastenviskositäten bei verschiedenen Schergeschwindigkeiten zu entnehmen.

Beispiel 2 (Vergleichsbeispiel)
Es wird, wie in Beispiel 1 bechrieben, verfahren. Als Emulgatorlösung wird jedoch eine 4,5%ige Lösung von Natriumlaurat im Wasser verwendet. Als Puffersubstanz werden 69,8 g Dinatriumphosphat und als Aktivatoren werden 1,37 g Kupfernitrat und 2 l einer 3%igen wässrigen Kaliumpersulfatlösung vorgelegt. Aktiviert wird mit einer 0,5%igen Wasserstoffsuperoxidlösung. Die Dispersion wird aufgearbeitet wie in Beispiel 1. Der pH-Wert des wässrigen Produktauszugs wird mit Hilfe einer 6%igen Ameisensäurelösung, die in der Verdüsungsanlage mit versprüht wird (Arbeitsweise gemäss DE-PS 2 531 780, Beispiel 3), auf 7,7 eingestellt. Die Pastenviskositäten des Pulvers, angepastet im Verhältnis 100:60, sind der Tabelle zu entnehmen.

Beispiel 3 (Vergleichsbeispiel)

In einem Rührautoklaven, wie in Beispiel 1 beschrieben, werden 55 kg einer durch kontinuierliche Emulsionspolymerisation hergestellten Dispersion mit einem Feststoffgehalt von 45%, polymerisiert gemäss DE-PS 2 208 442, Beispiel 1, auf Emulgatorbasis Natriumalkylsulfonat (MERSOLAT® K 30) vorgelegt. Der vorgelegte Latex wird mit einer 2%igen Natriumalkylsulfonatlösung abgesättigt. Hinzugefügt werden 161 l entsalztes Wasser, 49 g Mononatrium- und 59 g Dinatriumphosphat und 4,5 l einer 2%igen Kaliumpersulfatlösung. Die Vorlage wird auf 52°C aufgeheizt. Innerhalb von 3 Stunden wird der Autoklav mit 77,5 kg Vinylchlorid beschickt. Nach einer Polymerisationszeit von 10 Stunden ist die Reaktion beendet. Der Emulgatorgehalt im Polyvinylchlorid beträgt 0,55%, der Feststoffgehalt der Dispersion 31,4%, der K-Wert 70. Die Dispersion wird wie in Beispiel 1 aufgearbeitet. Die Pastenviskositäten des Pulvers, angepastet im Verhältnis 100:60, sind der Tabelle zu entnehmen.

Beispiel 4 (erfindungsgemäss)

Hier wird als Emulgator Natriumalkylsulfonat (MERSOLAT® K 30) eingesetzt, dessen 2%ige wässrige Lösung bei 20°C eine Oberflächenspannung von 33,1 mN/m zeigt.

In einem Rührautoklaven, wie in Beispiel 1 beschrieben, werden 44 kg einer durch kontinuierliche Polymerisation hergestellten Dispersion, polymerisiert gemäss DE-PS 2 208 442, Beispiel 1, auf Emulgatorbasis Natriumalkylsulfonat mit einem Feststoffgehalt von 45% vorgelegt. Der vorgelegte Latex hat eine Oberflächenspannung von 39 mN/m (gemessen bei 20°C). Hinzugefügt werden 75 l entsalztes Wasser, 84 g Mononatrium- und 100 g Dinatriumphosphat. Der Reaktor wird auf 52°C aufgeheizt, und es werden 45 kg Vinylchlorid und 0,2 l einer 4,5%igen Natriumalkylsulfonatlösung (MERSOLAT® K 30) zugegeben. Die Polymerisation wird, wie in Beispiel 1 beschrieben, aktiviert. Nach dem Start der Polymerisation werden innerhalb von 3 Stunden noch 70 kg VC zudosiert. Mit Hilfe von Messungen der Oberflächenspannung der Dispersion, die stündlich während der gesamten Polymerisation durchgeführt werden, wird der Emulgator jeweils so zudosiert, dass die Oberflächenspannung der Dispersion während der gesamten Polymerisationsperiode auf Werten zwischen 39 und 42 mN/m (bestimmt bei 20°C) gehalten wird, d.h. 18 bis 27% oberhalb des Wertes, den eine 2%ige wässrige Lösung des hier eingesetzten Emulgators Natriumalkylsulfonat (MERSOLAT® K 30) bei 20°C zeigt (33,1 mN/m).

Der Emulgator wird in folgender Weise zugegeben:

| Zeit in h | Emulgator in l | Umsatz in % |
|---|---|---|
| 2 | 0,5 | 27,5 |
| 3 | 8,9 | 47,6 |
| 4 | 10,2 | 64,1 |
| 5 | 3,7 | 74,4 |
| 6 | 10,0 | 86,0 |

Der Emulgatorgehalt im Polyvinylchlorid beträgt 1,4%, der Feststoffgehalt der Dispersion 45%, der K-Wert 70. Die Aufarbeitung der Dispersion erfolgt wie in Beispiel 1. Die Pastenviskositäten des Pulvers, angepastet im Verhältnis 100:60, sind der Tabelle zu entnehmen.

Beispiel 5 (erfindungsgemäss)

Hier wird als Emulgator Natriumlaurat eingesetzt, dessen 2%ige wässrige Lösung bei 20°C eine Oberflächenspannung von 35,7 mN/m zeigt.

Es wird verfahren, wie in Beispiel 4 beschrieben, jedoch mit den Ausnahmen, dass
– der vorgelegte Latex gemäss DE-PS 2 531 780, Beispiel 4, mit Natriumlaurat als Emulgator polymerisiert wird und eine Oberflächenspannung bei 20°C von 42,4 mN/m aufweist.
– als Emulgatorlösung eine 4,5%ige Lösung von Natriumlaurat in Wasser eingesetzt wird,
– mit 33 g Dinatriumphosphat gepuffert wird,
– 1,37 g Kupfernitrat und 60 g Kaliumpersulfat als Aktivatoren vorgelegt werden,
– mit einer 0,5%igen H$_2$O$_2$-Lösung aktiviert wird.

Mit Hilfe von Messungen der Oberflächenspannung, die stündlich während der gesamten Polymerisation durchgeführt werden, wird der Emulgator so zudosiert, dass die Oberflächenspannung der Dispersion während der gesamten Polymerisationsperiode auf Werten zwischen 42 und 46 mN/m (bestimmt bei 20°C) gehalten wird, d.h. 18 bis 29% oberhalb des Wertes, den eine 2%ige wässrige Lösung des hier eingesetzten Emulgators Natriumlaurat bei 20°C zeigt.

Der Emulgator wird in folgender Weise zugegeben:

| Zeit in h | Emulgator in l | Umsatz in % |
|---|---|---|
| 2 | 0,7 | 26,8 |
| 3 | 15,0 | 43,7 |
| 4 | 12,0 | 58,9 |
| 5 | 4,2 | 71,4 |
| 6 | 5,7 | 81,7 |

Der Emulgatorgehalt in Polyvinylchlorid beträgt 1,5%, der Feststoffgehalt der Dispersion 45,5%, der K-Wert 70. Die Aufarbeitung der Dispersion erfolgt wie in Beispiel 2. Die Pastenviskosität des Pulvers, angepastet im Verhältnis 100:60, sind der Tabelle zu entnehmen.

Beispiel 6 (erfindungsgemäss)

Es wird, wie in Beispiel 2 beschrieben, verfahren, jedoch mit der Ausnahme, dass in die Vorlage 1,2 l einer 4,5%igen wässrigen Natriumlaurat-Lösung gegeben werden. Die Oberflächenspannung der Vorlage stellt sich auf 46 mN/m ein. Die Oberflächenspannung der Dispersion wird während des gesamten Polymerisationsverlaufs auf Werten zwischen 45 bis 46 mN/m (bestimmt bei 20°C) gehalten, d.h. 26 bis 29% oberhalb des Wertes, den eine 2%ige wässrige Lösung des hier eingesetzten Emulgators bei 20°C zeigt.

Der Emulgator wird in folgender Weise zugegeben:

| Zeit in h | Emulgator in l | Umsatz in % |
|---|---|---|
| 2 | 5 | 27,3 |
| 3 | 10 | 45,8 |
| 4 | 10 | 61,1 |
| 5 | 3 | 72,5 |
| 6 | 0,8 | 85,7 |

Der Emulgatorgehalt im Polyvinylchlorid beträgt 1,1%, der Feststoffgehalt 44,4%, der K-Wert 70. Die Aufarbeitung der Dispersion erfolgt wie in Beispiel 2. Die Pastenviskositäten des Pulvers, angepastet im Verhältnis 100:60, sind der Tabelle zu entnehmen.

Tabelle

| Bei-spiel | Pastenviskosität (PVC/DOP-Verhältnis 100 : 60) in dPas bei Schergeschwindigkeiten D in s⁻¹ | | |
|---|---|---|---|
| | D = 0,3 | D = 1 | D = 100 |
| 1 | 400 | 200 | 50 |
| 2 | 3000 | 1100 | 85 |
| 3 | 2400 | 1000 | 75 |
| 4 | 80 | 55 | 30 |
| 5 | 600 | 360 | 100 |
| 6 | 360 | 210 | 89 |

**Patentansprüche**

1. Verfahren zur Herstellung von verpastbaren Polymeren des Vinylchlorids durch diskontinuierliche Polymerisation in wässriger Emulsion in Gegenwart von wasserlöslichen Katalysatoren und von Emulgatoren, dadurch gekennzeichnet, dass die Oberflächenspannung der Dispersion während des gesamten Polymerisationsvorgangs 15 bis 35% oberhalb des Wertes eingestellt wird, den die Oberflächenspannung einer 2%igen wässrigen Lösung des verwendeten Emulgators bei 20°C zeigt.

2. Verfahren nach Anspruch 1, dadurch gekennzeichnet, dass die Oberflächenspannung der Dispersion während des gesamten Polymerisationsvorgangs 18 bis 20% oberhalb des Wertes eingestellt wird, den die Oberflächenspannung einer 2%igen wässrigen Lösung des eingesetzten Emulgators bei 20°C zeigt.

3. Verfahren nach Anspruch 1, dadurch gekennzeichnet, dass die Oberflächenspannung zu Beginn der Polymerisation mittels eines durch Polymerisation von Vinylchlorid in wässriger Emulsion hergestellten Latex eingestellt wird, der den gleichen Emulgator enthält, wie er für die vorliegende Polymerisation verwendet wird, und der in einer Konzentration von 5 bis 20%, bezogen auf Polyvinylchlorid, eingesetzt wird.

**Claims**

1. A process for the production of a paste-forming polymer of vinyl chloride by discontinuous polymerisation in aqueous emulsion in the presence of a water-soluble catalyst and an emulsifier, charcterised in that the surface tension of the dispersion during the entire polymerisation procedure is regulated 15 to 35% above the value of the surface tension at 20°C of a 2% aqueous solution of the emulsifier used.

2. A process according to claim 1, characterised in that the surface tension of the dispersion during the entire polymerisation procedure is regulated 18 to 20% above the value of the surface tension at 20°C of a 2% aqueous solution of the emulsifier used.

3. A process according to claim 1, characterised in that the surface tension at the beginning of the polymerisation is regulated by means of a latex produced by polymerisation of vinyl chloride in aqueous emulsion and containing the same emulsifier as is being used for the polymerisation in question, the latex being introduced in a concentration of 5 to 20% based on polyvinylchloride.

**Revendications**

1. Procédé pour la préparation de polymères de chlorure de vinyle transformables en pâte, par polymérisation discontinue en émulsion aqueuse, en présence de catalyseurs hydrosolubles et d'émulsifiants, carctérisé par le fait que l'on règle la tension superficielle de la dispersion, pendant tout le processus de polymérisation, 15 à 35% au-dessus de la valeur que présente à 20°C la tension superficielle d'une solution aqueuse à 2% de l'émulsifiant utilisé.

2. Procédé selon la revendication 1, carctérisé par le fait que l'on règle la tension superficielle de la dispersion, pendant tout le processus de polymérisation, 18 à 20% au-dessus de la valeur que présente à 20°C la tension superficielle d'une solution aqueuse à 2% de l'émulsifiant utilisé.

3. Procédé selon la revendication 1, caractérisé par le fait que l'on règle la tension superficielle au début de la polymérisation au moyen d'un latex préparé par polymérisation de chlorure de vinyle en émulsion aqueuse et qui contient le même émulsifiant que l'on utilise pour la présente polymérisation et que l'on utilise à une concentration de 5 à 20% relativement au polychlorure de vinyle.